# EUROPEAN PATENT SPECIFICATION

(11) **EP 2 617 678 B1**
(45) Date of publication and mention of the grant of the patent: **31.07.2019**
(21) Application number: 12830913.5
(22) Date of filing: 09.03.2012
(51) Int. Cl.: C01B 7/07, B01D 15/08, B01D 3/14, C07B 63/00, C01B 7/01, B01D 53/26

(54) **METHOD AND SYSTEM FOR PREPARING HIGH-PURITY HYDROGEN CHLORIDE**
VERFAHREN UND SYSTEM ZUR HERSTELLUNG VON HOCHREINEM CHLORWASSERSTOFF
PROCÉDÉ ET SYSTÈME DE PRÉPARATION DE CHLORURE D'HYDROGÈNE DE GRANDE PURETÉ

(30) Priority: 11.10.2011 KR 20110103784; 29.11.2011 KR 20110126071
(43) Date of publication of application: 24.07.2013
(73) Proprietor: Hong-In Chemical Co. Ltd., Ulsan City 680-110 (KR)
(72) Inventor: LEE, Jae Kun, Chungcheongnamdo 330-160 (KR); LEE, Bum Yong, Seoul City 110-035 (KR)
(74) Representative: RGTH
(86) International application number: PCT/KR2012/001760
(87) International publication number: WO 2013/054989

(56) References cited:
- EP-A1- 1 149 861
- JP-A- H05 105 408
- JP-A- 2004 345 884
- KR-B1- 100 481 496
- KR-B1- 100 849 656
- KR-B1- 950 006 631
- US-A- 2 664 342
- US-A- 4 935 220
- DATABASE WPI Week 201129 Thomson Scientific, London, GB; AN 2011-C77294 XP002719192, & CN 101 948 094 A (TIANJIN TAIHENG GAS CO LTD) 19 January 2011 (2011-01-19)

## Description

### Technical Field

The present invention relates, in general, to a method and system for producing high-purity hydrogen chloride, and more particularly, to a method and system for producing high-purity hydrogen chloride, in which a high-purity hydrogen chloride having a purity of 3 N (99.9%) to 6 N (99.9999%) can be produced with low energy using a simpler process by reacting purified hydrogen with purified chloride at a high temperature of about 1,200^{∼}1,400 °C to synthesize hydrogen chloride, converting the hydrogen chloride to a liquid state and purifying the liquid-state hydrogen chloride.

### Background Art

Anhydrous hydrogen chloride (HCI), also known as anhydrous hydrochloric acid, is a compound, which has a molecular weight of 36.47, is present in a gaseous state at room temperature and atmospheric pressure and is liquefied at atmospheric pressure and -85 °C. Hydrogen chloride is used in the production of various chemicals, including medical drugs and dye intermediates, and particularly, high-purity hydrogen chloride is advantageously used in semiconductor manufacturing processes.

As used herein, the expression "hydrogen chloride" refers to a gaseous or liquid anhydrous hydrochloric acid, and the expression "hydrochloric acid" refers to a 35-37 wt% aqueous solution of hydrogen chloride. In addition, unless otherwise specified herein, the expression "high-purity hydrogen chloride" refers to a hydrogen chloride having a purity of 3 N (99.9%) or higher, preferably 3 N (99.9%) to 6 N (99.9999%). As used herein, the terms "crude hydrogen" and "crude chlorine" refer to unpurified hydrogen (H₂) and unpurified chlorine (Cl₂), respectively, and the terms "hydrogen" and "chlorine" refer to either purified hydrogen and chlorine, or hydrogen and chlorine elements in mixtures.

The synthesis of hydrogen chloride is generally performed by allowing crude chlorine (Cl₂) and crude hydrogen (H₂), produced by the electrolysis of brine, to react with each other at a high temperature of 1,200^{∼}1,300 °C.

[Reaction Equation 1] H₂ + Cl₂ → 2HCl + 44,000 Kcal

When HCI gas obtained according to reaction equation 1 is cooled and absorbed into water, a 35-37 wt% aqueous solution of hydrochloric acid is produced. Conventionally, the production of anhydrous hydrochloric acid is performed by a wet process using hydrochloric acid. Specifically, liquid hydrogen chloride is produced by heating a 35-37 wt% aqueous solution of hydrochloric acid in an evaporator to generate hydrogen chloride gas and dehydrating, drying, purifying and cooling the hydrogen chloride gas, followed by compression and cooling. This conventional production method has shortcomings in that a large amount of equipment maintenance cost is required because hydrochloric acid is treated at high temperature, and a large amount of energy cost is required because of the use of a large amount of steam.

If HCI gas produced according to reaction equation 1 can be compressed and cooled directly after the production thereof, anhydrous hydrogen chloride can be produced in a simple and easy manner. However, crude hydrogen (H₂) produced by the electrolysis of brine usually contains a large amount of water, and crude chlorine (Cl₂) produced in a general electrolytic cell contains oxygen (O₂), nitrogen (N₂), carbon dioxide (CO₂), water (H₂O) and metal components, and thus has a purity of about 99.8%. Among these impurities, water and oxygen interfere with the processes of compressing and liquefying hydrogen chloride. Specifically, water and oxygen which is converted to water during the synthesis of hydrogen chloride make it difficult to operate equipment such as a compressor. Thus, when water and oxygen are removed from the raw materials, a compressor for compressing hydrogen chloride can be used without difficulty, making it possible to produce a hydrogen chloride having a purity of 3 N or lower. However, in order to produce high-purity (99.999% or higher) hydrogen chloride which is used in semiconductor manufacturing processes and the like, not only water and oxygen, but also other impurities, need to be removed. Particularly, carbon dioxide gas, once mixed with hydrogen chloride gas, is almost impossible to separate from the hydrogen chloride gas. For this reason, the production of hydrogen chloride is based on the wet process which is disadvantageous in terms of productivity and cost.

US 2,664,342 discloses a method and an apparatus for the preparation of anhydrous hydrogen halide of high purity which is free of any substantial amount of hydrogen and/or free of halogen. The process involves reaction of hydrogen with a molar excess of chlorine in a reactor and reacting the reaction with an olefin, preferably propene in order to remove the excess chlorine by reaction with the olefin and purification of the hydrogen chloride.

### Disclosure

### Technical Problem

Accordingly, the present invention has been made keeping in mind the above-described problems occurring in the prior art, and an object of the present invention is to provide a method and system of producing high-purity hydrogen chloride by a dry process in a more economical and simpler manner, which can substitute for the conventional wet process of producing high-purity hydrogen chloride using hydrochloric acid as a starting material.

### Technical Solution

In order to accomplish the above objects, the present invention provides a method for producing high-purity hydrogen chloride as defined in claims 1 and 2.

The present invention also provides a system for producing high-purity hydrogen chloride as defined in claims 3 to 6.

### Advantageous Effects

According to the inventive method and system for producing high-purity hydrogen chloride, high-purity hydrogen chloride having a purity of 3N to 6N can be produced in a very simple and easy manner using a completely closed dry process by reacting hydrogen directly with chlorine to synthesize hydrogen chloride, compressing and cooling the synthesized hydrogen chloride and removing unreacted hydrogen from the hydrogen chloride in a simple distillation column. In addition, according to the present invention, the production process can be easily simplified and automated, and energy consumption can be significantly reduced.

### Description of Drawings

FIG. 1 is a schematic view showing the configuration of a system for producing high-purity hydrogen chloride according to one embodiment of the present invention.
FIG. 2 is a schematic view showing the configuration of a chlorine purification system for removing impurities from the raw material crude chlorine gas according to one embodiment of the present invention.

### Mode for Invention

The above objects, features and advantages of the present invention will be more apparent from the following embodiments explained with respect to the accompanying drawings.

In embodiments of the present invention disclosed in the specification of the present invention, specific structural or functional descriptions are exemplified to merely describe the embodiments of the present invention, and the embodiments of the present invention can be implemented in various forms and should not be interpreted as being limited to the embodiments described in the specification of the present invention.

The present invention can be modified variously and can have various forms, and specific embodiments will be illustrated in the drawings and will be described in detail in the specification..

Terms, such as "first" and/or "second," can be used to describe various components, but the components are not limited by the terms. The terms are used only for the purpose of distinguishing a component from other components. For example, the first component can be designated as the second component without departing from the scope of the present invention, and, similarly, the second component can also be designated as the first component.

When it is stated that a specific component is "connected" or "coupled" to another component, it should be understood that the specific component, can be directly connected or linked, but other components may be interposed between the specific component and the other component. In contrast, when it is stated that a specific component is "directly connected" or "directly coupled" to another component, it should be understood that no other components are interposed between the specific component and the other component. Other expressions for describing the relationship between components, that is, "between ^{∼}", and "immediately between ^{∼}", or "adjacent to ^{∼}", and "immediately adjacent to ^{∼}", should be interpreted in the same manner.

The terms used in the present specification are used only to describe specific embodiments, and are not intended to limit the present invention. Singular expressions may include the meaning of plural expressions unless otherwise clearly specified. In the present application, it should be understood that terms such as "comprises" or "has", are intended to indicate that proposed features, numbers, steps, operations, components, parts, or combinations thereof exist, and the probability of existence or addition of one or more other features, steps, operations, components, parts or combinations thereof is not excluded thereby.

Unless otherwise defined, all terms used herein, including technical or scientific terms, are not defined otherwise, have the same meaning as terms generally understood by those skilled in the art. The terms, such as those defined in generally used dictionaries, should be interpreted as having the same meaning as the terms in the context of related arts, and are not to be interpreted to have meanings that are ideal or are excessively formal, when the terms are not explicitly defined in the present specification.

Hereinafter, preferred embodiments of the present invention will be described in detail with reference to the accompanying drawings. Like reference numbers in each of the drawings indicate like members.

The inventive method for producing high-purity hydrogen chloride comprises the steps of: purifying each of crude hydrogen and crude chlorine as raw materials to a purity of 99.999% or higher; reacting an excessive molar amount of the purified hydrogen with the purified chlorine at a temperature ranging from 1,200 °C to 1,400 °C to synthesize hydrogen chloride; converting the hydrogen chloride to a liquid state by compression; and purifying the hydrogen chloride and separating unreacted hydrogen by fractional distillation.

As described above, crude hydrogen (H₂) gas produced by the electrolysis of brine has a purity of only 95-96%, and crude (Cl₂) gas in a general electrolytic cell contains oxygen (O₂), nitrogen (N₂), carbon dioxide (CO₂), water (H₂O) and metal components, and thus has a purity of about 99.8%. In the present invention, hydrogen having a purity of 99.9999% or higher is provided by removing water and oxygen from crude hydrogen using a catalyst and an adsorbent, and chlorine having a purity of 99.9999% or higher is provided by removing water and other impurities from crude chlorine using a chlorine purification system to be described later.

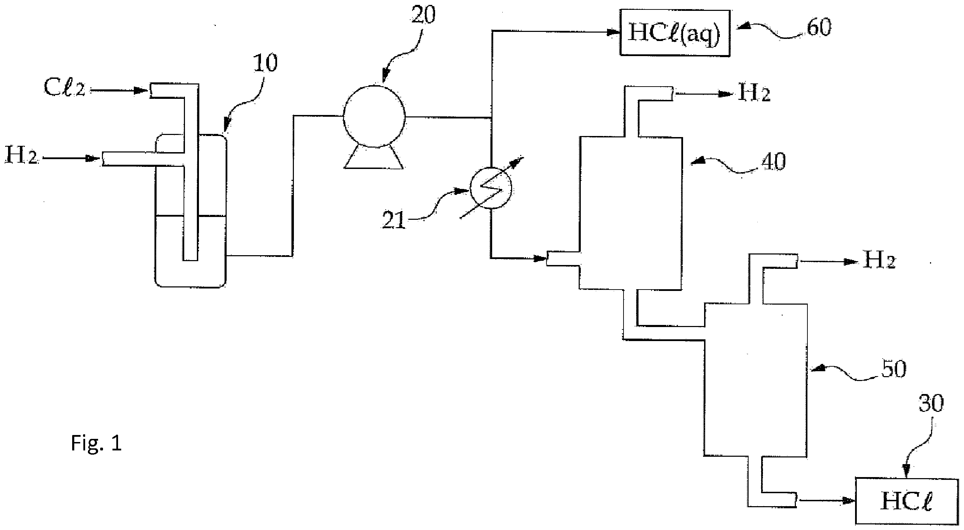

FIG. 1 is a schematic view showing the configuration of a system for producing high-purity hydrogen chloride according to one embodiment of the present invention. As shown in FIG. 1, the inventive system for producing high-purity hydrogen chloride may comprise: hydrogen and chlorine supply pipes for supplying hydrogen and chlorine purified to a purity of 99.999% or higher, respectively; a reactor in which hydrogen and chlorine, supplied through the hydrogen and chlorine supply pipes, are reacted with each other to synthesize hydrogen chloride; a compressor for liquefying the hydrogen chloride by compression; and a distillation column for purifying the liquefied hydrogen chloride and separating and removing unreacted hydrogen by fractional distillation.

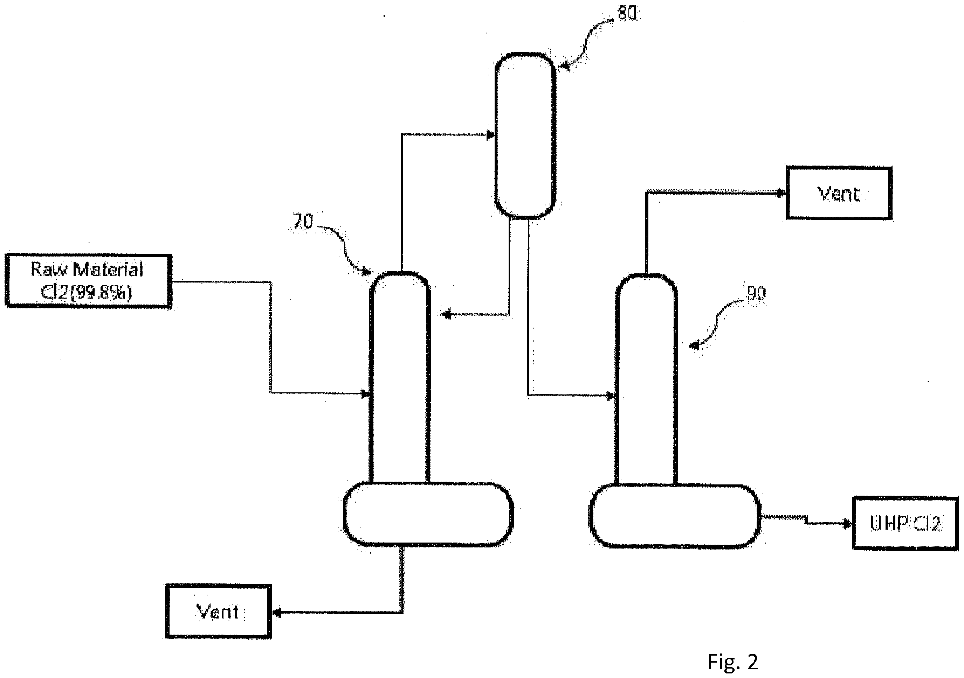

In addition, the inventive system for producing high-purity hydrogen chloride may further comprise a chlorine purification system provided in front of the chlorine supply pipe. FIG. 2 shows an embodiment of the chlorine purification system.

As shown in FIG. 2, the chlorine purification system may comprise: an adsorption column for removing water from chlorine gas having a purity of 99.8%; a first low-temperature distillation column for removing metal components from the chlorine gas; a cooler for cooling chlorine distilled in the first low-temperature distillation column; and a second low-temperature distillation column for removing gas components from the chlorine. This chlorine purification system can be connected in-line with the above system for producing high-purity hydrogen chloride such that it can supply purified high-purity chlorine to the hydrogen chloride production system. Alternatively, the chlorine purification system can also be present separately from the hydrogen chloride production system such that purified high-purity chlorine, purified in the chlorine purification system and stored in a tank, can be supplied to the hydrogen chloride production system.

Using the chlorine purification system, high-purity chlorine having a purity of 99.9999% or higher can be obtained by passing crude chlorine gas having a purity of 99-99.9% through an adsorption column to remove water, passing the crude chlorine through a first low-temperature distillation column (temperature: -25 °C to 15 °C) to remove metal components such as iron, chromium and nickel, and then passing the crude chlorine through a second low-temperature distillation column (temperature: -35 °C to 5 °C) to remove gas components such as carbon dioxide, nitrogen and oxygen.

In the inventive system for producing high-purity hydrogen chloride, the flow rates of chlorine and hydrogen, which are raw materials, are controlled by a flow control valve (FVC). For the reaction of hydrogen with chlorine, hydrogen is preferably added in an amount larger than chlorine. Theoretically, hydrogen and chlorine should be allowed to react at a molar ratio of 1:1 in order to produce hydrogen chloride. However, when unreacted chlorine remains in hydrogen chloride, it will not be easy to separate from the hydrogen chloride, and the toxicity of the remaining chlorine can cause damage to the reaction system. For this reason, for the reaction of hydrogen with chlorine, hydrogen is preferably added in an amount larger than chlorine by 10-20 mole%.

The reactor is preferably made of graphite which is not influenced by the raw material chlorine or hydrogen chloride at high temperature, and the compressor is preferably made of a material which can resist hydrogen chloride. The compressor is preferably a reciprocating compressor comprising two or more stages. In addition, in order to increase compression efficiency, a chiller is preferably provided in front or rear of the compressor. The operating temperature of the reactor is 1,200^{∼}1,400 °C, and preferably 1,300 ± 50 °C. In order to maintain this temperature, hydrogen is heated by combustion with air, and water produced by this heating is absorbed by HCI gas produced in the initial stage of synthesis and is removed with hydrochloric acid. After the initial reaction, the temperature of the reactor can be maintained by reaction heat. After the reaction, a portion of unreacted hydrogen is suitably vented before or after passage through the chiller, thus reducing cooling efficiency, the liquefied hydrogen chloride is subjected to a purification process of removing metal components and the like by fractional distillation and a process of separating and removing unreacted hydrogen. In this way, high-purity hydrogen chloride having a purity of 6N or higher can be produced by passing the liquefied hydrogen chloride through the multi-stage distillation column and removing impurities such as hydrogen through the top of the column. The liquefied hydrogen chloride contains a very small amount of hydrogen due to partial pressure, and this hydrogen can act as an impurity in some processes. For this reason, the liquefied hydrogen chloride is preferably distilled in a distillation column at low temperature to completely remove the remaining hydrogen. In the inventive system for producing high-purity hydrogen chloride, the compressor or the distillation column preferably comprises two or more stages which provide higher efficiency. The hydrogen chloride, subjected to fractional distillation in the distillation column, is stored in a hydrogen chloride tank which stores purified liquid hydrogen chloride.

In addition, in order to increase economical efficiency, the inventive system for producing high-purity hydrogen chloride may further comprise a cooling/absorption column which can produce a 37-38 wt% aqueous solution of hydrochloric acid having a high purity of 5N (99.999%) or higher by dissolving a portion of the synthesized gas in ultrapure water before liquefaction.

As described above, in the inventive method and system for producing high-purity hydrogen chloride, hydrogen chloride can be produced with a purity ranging from 3 N (99.9%) to 6 N (99.9999%) depending on the degree of purification of the raw materials and the reaction product. In addition, the production process can be simplified and energy consumption can be significantly reduced, compared to the conventional wet process. Thus, according to the present invention, a large amount of high-purity hydrogen chloride can be produced in a more cost-effective manner.

Hereinafter, the present invention will be described in further detail with reference to examples. It is to be understood, however, that these examples are for illustrative purposes only and are not intended to limit the scope of the present invention.

### Example

In the example of the present invention, a system for producing high-purity hydrogen chloride was used, which comprises: a reactor 10 for reacting purified high-purity hydrogen with purified high-purity chlorine; a compressor 20 for cooling and compressing the hydrogen chloride gas obtained in the reactor; a chiller 21 for the hydrogen chloride passed through the compressor; a hydrochloric acid tank 60 for dissolving the hydrogen chloride, passed through the compressor, in deionized water, to prepare high-purity hydrochloric acid, and storing the prepared hydrochloric acid; a two-stage distillation column (i.e., a first distillation column 40 and a second distillation column 50) for fractionally distilling the hydrogen chloride, liquefied in the compressor, to remove unreacted hydrogen and the like; and a hydrogen chloride tank 30 for storing the hydrogen chloride purified in the distillation column. Using this hydrogen chloride production system, hydrogen chloride was produced. Specifically, hydrogen and chlorine were introduced into the reactor at flow rates of about 80 m³/hr and about 70 m³/hr, respectively, such that the amount of hydrogen introduced was larger than that of chlorine by about 15 mole%. The reactor was maintained at about 1,300 °C. The temperature of the synthesized hydrogen chloride at the outlet of the compressor was about 60^{∼}165 °C, and the synthesized hydrogen chloride was liquefied by cooling to about -20 °C using the chiller, and the liquefied hydrogen chloride was cooled to about -40 °C while it was passed through the distillation column.

Table 1 below shows the results of analysis of purities and impurities of crude hydrogen and crude chlorine as raw materials, hydrogen and chlorine after purification, and hydrogen chloride after purification in a compressor and a distillation column, as carried out according to the present invention. Table 2 below shows the results of analysis of purity and impurities of an aqueous hydrochloric acid solution formed in a cooling/absorption column from a hydrogen chloride produced using the inventive system for producing high-purity hydrogen chloride. As can be seen in Tables 1 and 2, hydrogen chloride produced using the inventive system for producing high-purity hydrogen chloride had a purity of 5 N-6 N (99.999-99.9999%).

**[Table 1]**

| | | Raw materials | | After purification of raw materials | | After synthesis | After purification | Storage tank |
|---|---|---|---|---|---|---|---|---|
| | | Crude H₂ | Crude Cl₂ | H₂ | Cl₂ | HCl | HCl | HCl |
| Purity | | 95-96% | 99.8 % | 99.999 % | 99.9995% | 99.995 % | 99.999-99.9999 % | 99.999-99.9999% |
| Impurities | O₂ | ≤10 ppm | ≤500 ppm | ≤ 2 ppm | ≤0.5 ppm | ≤1 ppm | ≤1 ppm | ≤1 ppm |
| | N₂ | - | | ≤1 ppm | ≤1 ppm | ≤1 ppm | ≤1 ppm | ≤1 ppm |
| | CO | - | | ≤1 pm | ≤0.5 ppm | ≤0.5 ppm | ≤0.5 ppm | ≤0.5 ppm |
| | CO₂ | - | | ≤ 1 ppm | ≤0.5 ppm | ≤0.5 ppm | ≤1 ppm | ≤1 ppm |
| | CH₄ | - | | ≤1 ppm | ≤0.5 ppm | ≤1 ppm | - | - |
| | H₂O | ≤40,000 ppm | ≤5ppm | ≤4 ppm | ≤1 ppm | ≤1 ppm | ≤1 ppm | ≤1 ppm |

**[Table 2]**

| | 37% HCl mixing | | | 37% HCl storage tank | |
|---|---|---|---|---|---|
| | HCl | | DI water | 37% HCl | |
| Purity | 99.999-99.9999% | | 18 Ω.cm or more | 36-38% | |
| Impurities | O₂ | ≤1 ppm | - | NH4 | ≤0.5 ppm |
| | N₂ | ≤1 ppm | | SO4 | ≤0.5 ppm |
| | CO | ≤0.5 ppm | | PO4 | ≤0.05 ppm |
| | CO₂ | ≤1 ppm | | Residue on | ≤3 ppm |
| | CH₄ | - | | Total | <1,000 ppb |
| | H₂O | ≤1 ppm | | | |

The scope of the present invention is limited only by matters set forth in the claims and those skilled in the art can modify and change the technical subjects of the present invention in various forms. Therefore, as long as these improvements and changes are apparent to those skilled in the art, they are included in the protective scope of the present invention.

### [Description of Reference Numerals in the Drawings]

10: reactor for HCI synthesis;
20: compressor;
21: chiller;
30: hydrogen chloride tank;
40: first HCI distillation column;
50: second HCI distillation column;
60: hydrochloric acid tank;
70: first low-temperature distillation column;
80: Cl₂ cooler;
90: second low-temperature distillation column.

### Industrial Applicability

As described above, in the inventive method and system for producing high-purity hydrogen chloride, hydrogen chloride can be produced with a purity ranging from 3 N (99.9%) to 6 N (99.9999%) depending on the degree of purification of the raw materials and the reaction product. In addition, the production process can be simplified and energy consumption can be significantly reduced, compared to the conventional wet process. Thus, according to the present invention, a large amount of high-purity hydrogen chloride can be produced in a more cost-effective manner.

## Claims

1. A method for producing high-purity hydrogen chloride with a purity of 99.9% or higher, comprising the steps of:
purifying each of crude hydrogen and crude chlorine as raw materials to a purity of 99.999% or higher, wherein purifying the crude hydrogen is performed by removing water and oxygen from the crude hydrogen using a catalyst and an adsorbent, and purifying the crude chlorine is performed by subjecting the crude chlorine gas to a first adsorption process to remove water, subjecting the crude chlorine to a first low-temperature distillation process to remove metal components, and then subjecting the crude chlorine to a second low-temperature distillation process to remove gas components other than chlorine;
reacting an excessive molar amount of the purified hydrogen with the purified chlorine at a temperature ranging from 1,200 °C to 1,400 °C to synthesize hydrogen chloride;
converting the hydrogen chloride to a liquid state by compression; and
purifying the hydrogen chloride and separating unreacted hydrogen by fractional distillation.

2. The method of claim 1, wherein the purified hydrogen is used in an amount larger than the purified chlorine by 10-20 mol% in the step of reacting.

3. A system for producing high-purity hydrogen chloride with a purity of 99.9% or higher, comprising:
a catalyst and an adsorbent for purifying crude hydrogen by removing water and oxygen from the crude hydrogen,
a chlorine purification system comprising an adsorption column for removing water from crude chlorine gas; a first low-temperature distillation column for removing metal components; a cooler for cooling chlorine distilled in the first low-temperature distillation column; and a second low-temperature distillation column for removing gas components other than chlorine,
hydrogen and chlorine supply pipes for supplying hydrogen and chlorine purified to a purity of 99.999% or higher, respectively;
a reactor in which hydrogen and chlorine, supplied through the hydrogen and chlorine supply pipes, are reacted with each other at a temperature ranging from 1,200 °C to 1,400 °C to synthesize hydrogen chloride;
a compressor for liquefying the hydrogen chloride by compression; and
a distillation column for purifying the liquefied hydrogen chloride and separating and removing unreacted hydrogen by fractional distillation.

4. The system of claim 3, wherein a chiller is provided in front or rear of the compressor.

5. The system of claim 3, wherein the compressor or the distillation column comprises two or more stages.

6. The system of claim 3, wherein the system further comprises a cooling/absorption column in which the hydrogen chloride resulting from the compressor is dissolved without purification to prepare hydrochloric acid.

## Patentansprüche

1. Verfahren zur Herstellung von hochreinem Chlorwasserstoff mit einer Reinheit von 99,9% oder mehr, umfassend die folgenden Schritte:
Reinigen von Rohwasserstoff und Rohchlor als Rohmaterialien auf eine Reinheit von 99,999% oder mehr; wobei das Reinigen des Rohwasserstoffs durch Entfernen von Wasser und Sauerstoff aus dem Rohwasserstoff unter Verwendung eines Katalysators und eines Adsorbers durchgeführt wird, und das Reinigen des Rohchlors durchgeführt wird, indem das Rohchlorgas einem ersten Adsorptionsprozess unterzogen wird, um Wasser zu entfernen, das Rohchlor einem ersten Niedertemperaturdestillationsprozess unterzogen wird, um Metallkomponenten zu entfernen, und dann das Rohchlor einem zweiten Niedertemperaturdestillationsprozess unterzogen wird, um andere Gaskomponenten als Chlor zu entfernen;
Umsetzen einer überschüssigen molaren Menge des gereinigten Wasserstoffs mit dem gereinigten Chlor bei einer Temperatur im Bereich von 1.200°C bis 1.400°C, um Chlorwasserstoff zu synthetisieren;
Umwandeln des Chlorwasserstoffs durch Kompression in einen flüssigen Zustand; und
Reinigen des Chlorwasserstoffs und Abtrennen von unverbrauchtem Wasserstoff durch fraktionale Destillation.

2. Verfahren nach Anspruch 1, wobei der gereinigte Wasserstoff in einer Menge eingesetzt wird, die um 10 bis 20 Mol-% in der Reaktionsstufe größer ist als das gereinigte Chlor.

3. System zur Herstellung von hochreinem Chlorwasserstoff mit einer Reinheit von 99,9% oder höher, umfassend:
einen Katalysator und einen Adsorber zum Reinigen des Rohwasserstoffs durch Entfernen von Wasser und Sauerstoff aus dem Rohwasserstoff;
ein Chlorreinigungssystem umfassend eine Adsorptionskolonne zum Entfernen von Wasser aus Rohchlorgas, eine erste Niedertemperaturdestillationskolonne zum Entfernen von Metallkomponenten; einen Kühler zum Kühlen von in der ersten Niedertemperaturdestillationskolonne destilliertem Chlor; und eine zweite Niedertemperaturdestillationskolonne zum Entfernen von Gaskomponenten außer Chlor,
Wasserstoff- und Chlorzuführrohre zum Zuführen von Wasserstoff und Chlor, die jeweils bis zu einer Reinheit von 99,999% oder höher gereinigt sind;
einen Reaktor, in dem Wasserstoff und Chlor, die durch die Wasserstoff- und Chlorzuführleitungen zugeführt werden, bei einer Temperatur im Bereich von 1.200°C bis 1.400°C zusammengebracht werden, um Chlorwasserstoff zu synthetisieren; einen Kompressor zum Verflüssigen des Chlorwasserstoffs durch Kompression; und eine Destillationskolonne zum Reinigen des verflüssigten Chlorwasserstoffs und zum Trennen und Entfernen von unverbrauchtem Wasserstoff durch fraktionale Destillation.

4. System nach Anspruch 3, wobei ein Kühler vor oder hinter dem Kompressor vorgesehen ist.

5. System nach Anspruch 3, wobei der Kompressor oder die Destillationskolonne zwei oder mehr Stufen umfasst.

6. System nach Anspruch 3, wobei das System ferner eine Kühl-/Absorptionskolonne umfasst, in der der aus dem Kompressor resultierende Chlorwasserstoff ohne Reinigung gelöst wird, um Salzsäure herzustellen.

## Revendications

1. Procédé de production de chlorure d'hydrogène de haute pureté ayant une pureté supérieure ou égale à 99,9 %, comprenant les étapes consistant à :
purifier chacun parmi l'hydrogène brut et le chlorure brut comme matière première à une pureté supérieure ou égale à 99,999 %, dans lequel la purification de l'hydrogène brut est effectuée par l'élimination d'eau et oxygène à partir de l'hydrogène brut en utilisant un catalyseur et un adsorbant, et la purification du chlorure brut est effectuée en soumettant le chlorure brut gazeux à un premier processus d'adsorption afin d'éliminer l'eau, soumettre le chlorure brut à un premier processus de distillation à basse température afin d'éliminer les composants métalliques, et ensuite soumettre le chlorure brut à un second processus de distillation à basse température afin d'éliminer les composants gazeux autres que le chlore ;
faire réagir une quantité molaire en excédent de l'hydrogène purifié avec le chlore purifié à une température comprise entre 1200 °C et 1400 °C afin de synthétiser du chlorure d'hydrogène ;
convertir le chlorure d'hydrogène à l'état liquide par compression ; et
purifier le chlorure d'hydrogène et séparer d'hydrogène qui n'a pas réagi par distillation fractionnée.

2. Procédé selon la revendication 1, dans lequel l'hydrogène purifié est utilisé en une quantité supérieure au chlorure purifié de 10 à 20 % en mole dans l'étape de réaction.

3. Système de production de chlorure d'hydrogène de haute pureté ayant une pureté supérieure ou égale à 99,9 %, comprenant :
un catalyseur et un adsorbant destinés à la purification d'hydrogène brut par l'élimination d'eau et d'oxygène de l'hydrogène brut,
un système de purification de chlore comprenant une colonne d'adsorption destinée à l'élimination d'eau à partir du chlorure brut gazeux ; une première colonne de distillation à basse température destinée à l'élimination de composants métalliques; un dispositif de refroidissement destiné au refroidissement de chlore distillé dans la première colonne de distillation à basse température ; et une seconde colonne de distillation à basse température destinée à l'élimination de composants gazeux autres que le chlore,
des tuyaux d'alimentation en hydrogène et en chlore destinés à alimenter de l'hydrogène et du chlore purifiés à une pureté supérieure ou égale à 99,999 %, respectivement ;
un réacteur dans lequel de l'hydrogène et du chlore, alimentés grâce aux tuyaux d'alimentation en hydrogène et en chlore, sont mis en réaction l'un avec l'autre à une température comprise entre 1200 °C et 1400 °C afin de synthétiser du chlorure d'hydrogène ;
un compresseur destiné à la liquéfaction du chlorure d'hydrogène par compression ; et
une colonne de distillation destinée à la purification du chlorure d'hydrogène liquéfié et à la séparation et à l'élimination d'hydrogène qui n'a pas réagi par distillation fractionnée.

4. Système selon la revendication 3, dans lequel un dispositif de refroidissement est monté à l'avant ou à l'arrière du compresseur.

5. Système selon la revendication 3, dans lequel le compresseur ou la colonne de distillation comprend au moins deux étages.

6. Système selon la revendication 3, dans lequel le système comprend en outre une colonne de refroidissement/absorption dans laquelle le chlorure d'hydrogène provenant du compresseur est dissous sans purification afin de préparer de l'acide chlorhydrique.
